# EUROPEAN PATENT APPLICATION

(11) **EP 4 626 085 A1**
(43) Date of publication of application: **01.10.2025**
(21) Application number: 23894908.5
(22) Date of filing: 14.11.2023
(51) Int. Cl.: H04W 52/02, H04L 27/06

(54) **DATA RECEIVING DEVICE AND DATA RECEIVING METHOD**

(30) Priority: 25.11.2022 KR 20220160243; 25.10.2023 KR 20230143756
(71) Applicant: LX Semicon Co., Ltd., Daejeon 34027 (KR)
(72) Inventor: SEON, Yong Ju, Daejeon 34027 (KR); SEO, Young Ho, Daejeon 34027 (KR); YU, Han Ju, Daejeon 34027 (KR); JANG, Ji Young, Daejeon 34027 (KR)
(74) Representative: Ter Meer Steinmeister & Partner
(86) International application number: PCT/KR2023/018256
(87) International publication number: WO 2024/111979

(57) **Abstract**

A data receiving method, according to embodiments, may comprise the steps of: determining a wake-up signal transmitted through an auxiliary path, wherein the step of determining the wake-up signal comprises amplifying the voltage of the wake-up signal, comparing the amplified voltage of the wake-up signal with a first reference voltage, if the amplified voltage of the wake-up signal is greater than the first reference voltage, demodulating the wake-up signal in a preset manner, and checking the pattern of the demodulated wake-up signal; demodulating a data signal transmitted through a main path and comparing the voltage of the demodulated data signal with a second reference voltage; and if the voltage of the data signal is greater than the second reference voltage, decoding the data signal.

## Description

### TECHNICAL FIELD

Embodiments relate to a data receiving device and a data receiving method. More specifically, the embodiments relate to a data receiving device and method for determining a wake-up signal of a received signal through a radio frequency (RF) receiving module and determining whether to decode a data signal.

### BACKGROUND ART

An RF receiver receives and demodulates data. The RF receiver may receive a wake-up signal together with a data signal. The receiver is activated according to the wake-up signal. Due to the operation of components of a demodulator, a significant power consumption problem arises. Since the RF receiver may receive a noise signal together, it has a technical problem that it is more difficult to detect the wake-up signal. Therefore, there is a need for an efficient on/off scheme in a receiving device for determining whether to activate the RF receiver.

### DISCLOSURE

### TECHNICAL PROBLEM

Embodiments provide a demodulator, a receiving device, and a receiving method capable of efficiently determining a wake-up signal and effectively reducing power consumption of the receiving device.

### TECHNICAL SOLUTION

A data receiving method according to embodiments may include: determining a wake-up signal transmitted through an auxiliary path by amplifying a voltage of the wake-up signal, comparing the amplified voltage of the wake-up signal with a first reference voltage, and, when the amplified voltage of the wake-up signal is greater than the first reference voltage, demodulating the wake-up signal using a preset scheme and checking a pattern of the demodulated wake-up signal; demodulating a data signal transmitted through a main path and comparing a voltage of the demodulated data signal with a second reference voltage; and decoding the demodulated data signal when the voltage of the demodulated data signal is greater than the second reference voltage.

### EFFECT OF THE INVENTION

The embodiments provide a demodulator, a receiving device, and a receiving method capable of efficiently determining a wake-up signal and effectively reducing power consumption of the receiving device.

The embodiments may enable efficient data reception through a wireless network.

The embodiments may efficiently process both a data signal and a wake-up signal in terms of power consumption.

The embodiments may provide a method for enabling blocks of the receiving device for each condition, thereby reducing unnecessary power consumption with low complexity.

### BRIEF DESCRIPTION OF THE DRAWINGS

The drawings are included to provide a further understanding of embodiments and illustrate the embodiments in conjunction with the description related thereto. For a better understanding of various embodiments described below, reference should be made to the following description of the embodiments in conjunction with the following drawings including portions corresponding to like reference numbers.
FIG. 1 illustrates a structure of a data receiving device according to embodiments.
FIG. 2 illustrates a data receiving method according to embodiments.

### BEST MODE FOR CARRYING OUT THE INVENTION

A preferred embodiment of the embodiments will be described in detail below, and an example thereof is shown in the accompanying drawings. The following detailed description with reference to the accompanying drawings is provided not to represent only an embodiment that may be implemented according to the embodiments, but rather to describe a preferred embodiment of the embodiments. The following detailed description includes specific details in order to provide a thorough understanding of the embodiments. However, it will be apparent to those skilled in the art that the embodiments may be implemented without these specific details.

Most of the terms used in the embodiments are selected from the general ones widely used in the relevant field, but some terms are arbitrarily selected by the applicant, and the meanings of such terms will be described in detail in the following description as needed. Therefore, the embodiments should be understood based on the intended meanings of the terms, rather than their simple names or literal meanings.

In the case of an RF receiver, since a large number of devices use the 2.4 GHz band, there is a problem in that the baseband digital part must be frequently woken up. The baseband digital part of the RF receiver generates power consumption accounting for 30% of the total power consumption of the receiver, and thus frequent wake-up operations may reduce the power efficiency of the receiver. The embodiments provide an efficient low-power receiving device that solves this technical problem.

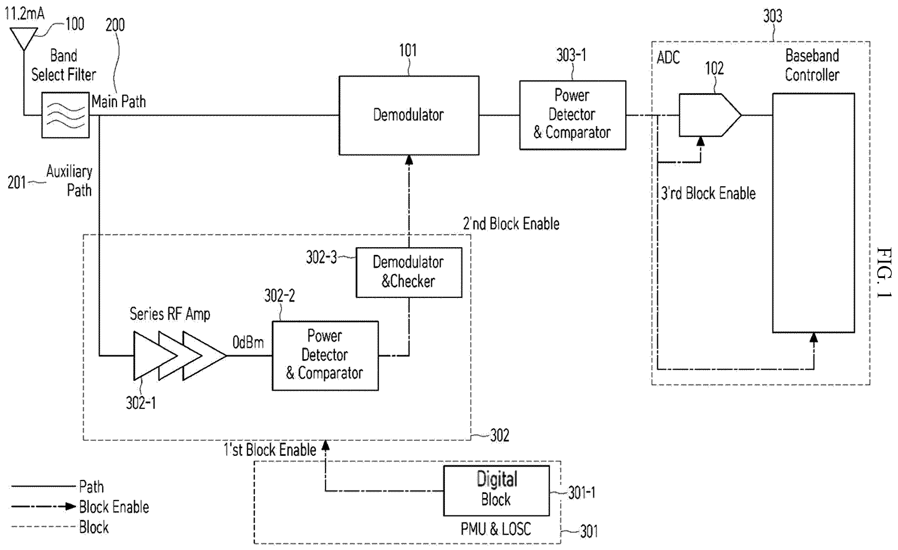

FIG. 1 illustrates a data receiving device according to embodiments.

An RF receiving module 100 receives a modulated carrier signal from a transmitter through an antenna. The received signal includes a data signal and a wake-up signal. The data signal may be data including audio and/or video. The wake-up signal refers to a signal for activating a receiving device. Based on whether a first enable condition, a second enable condition, and a third enable condition of the wake-up signal are satisfied, decoding of the data signal by the receiving device may be activated. A filter connected to the RF receiving module 100 may filter the signal by selecting a specific bandwidth.

The signal received by the RF receiving module 100 includes the data signal and/or the wake-up signal. According to the wake-up signal, the receiving device determines whether to receive, demodulate, and decode the data signal. Due to network characteristics, the wake-up signal may include noise, and if a process of demodulating and decoding the data signal is activated whenever the receiving device incorrectly detects the wake-up signal, power usage efficiency of the receiving device is reduced. Accordingly, the embodiments provide a method of accurately determining the wake-up signal and determining whether to decode the data signal.

A demodulator 101 may demodulate the data signal received by the RF receiving module 100 if it is determined that the signal received by the RF receiving module 100 includes the wake-up signal. A path of the signal transmitted to the demodulator 101 is referred to as a main path 200. Although not illustrated in FIG. 1, functional blocks of the demodulator 101 may include, for example, a low noise amplifier (LNA), a channel selection filter, and a variable gain amplifier (VGA). The demodulator 101 may amplify the received signal through the LNA to distinguish between a noise signal and the data signal included in the received signal. The demodulator 101 may reduce noise included in the RF received signal and amplify the data signal through the amplifier. The demodulator 101 may filter a specific channel of the received signal through the channel selection filter. The demodulator 101 may select and filter a specific channel included in the amplified data signal and amplify it. The demodulator 101 may amplify the received signal based on a gain value through the VGA. However, the blocks and operations that may be included in the demodulator 101 are not limited to the above-described blocks and operations, and may include all blocks that demodulate the RF received signal based on an analog scheme.

A component 302 of the receiving device connected to an auxiliary path 201 includes a continuous RF amplifier 302-1, a power detector and comparator 302-2, and a demodulator and checker 302-3. The auxiliary path 201 refers to a signal processing path of the continuous RF amplifier 302-1, the power detector and comparator 302-2, and the demodulator and checker 302-3. The continuous RF amplifier 302-1 may amplify the signal received by the RF receiving module 100. The continuous RF amplifier 302-1 is activated according to a duty cycle. The duty cycle refers to a period representing activation (on) and deactivation (off). During the activation period of the duty cycle, the continuous RF amplifier 302-1 may amplify the signal transmitted through the auxiliary path 201. During the deactivation period of the duty cycle, signal transmission through the auxiliary path 201 is deactivated. The duty cycle is generated by a digital block 301.

The power detector and comparator 302-2 may compare the voltage of the signal amplified by the continuous RF amplifier 302-1 with a reference voltage. Additionally, when necessary, if the power of the signal is lower than that of surrounding noise signals, the signal power may be amplified based on a gain value. The value of the reference voltage may be set according to the performance of the receiving device and a network environment. The demodulator and checker 302-3 analyzes a pattern of the signal that has passed through the power detector and comparator 302-2. To analyze the signal pattern, the demodulator and checker 302-3 may modulate the signal using a digital scheme. A modulation scheme according to embodiments may be, for example, OOK. Here, OOK refers to on-off keying (OOK). Specifically, it is a modulation scheme that represents digital data based on the presence or absence of a carrier wave. It is the simplest scheme among amplitude shift keying modulation schemes. The OOK modulation is merely an example, and modulation schemes available for data patterns may include all digital modulation schemes in addition to OOK. When the data pattern checked by the demodulator and checker 302-3 is determined to be the wake-up signal, the signal determined as the wake-up signal may be transmitted to the demodulator 101 of the main path 200.

As described above, when the receiving device determines the wake-up signal based on the auxiliary path 201 and the demodulator 101 demodulates the data signal, a power detector and comparator 303-1 may compare the voltage of the demodulated signal with a reference voltage. If the voltage of the demodulated signal is lower than the reference voltage, it indicates that the voltage of the demodulated signal does not need to be decoded. An analog-to-digital converter (ADC) 102 that does not receive an enable signal for activating its operation from the power detector and comparator 303-1 does not convert the demodulated signal into a digital signal and does not decode the demodulated signal, thereby reducing power consumption. If the voltage of the demodulated signal is higher than the reference voltage, it indicates that the voltage of the demodulated signal needs to be decoded. The power detector and comparator 303-1 transmits an enable signal for activating the operation of the ADC 102 to the ADC 102, and activates the operation of a third enable block 303. Accordingly, the power detector and comparator 303-1 finally checks whether to activate before decoding after data demodulation.

In the third enable block 303, the analog-to-digital converter ADC 102 is activated when the voltage of the demodulated signal is higher than the reference voltage. The reference voltage may be an optimally set value for improving system power consumption efficiency. The reference voltage may be changed according to a data receiving environment. The power detector and comparator 303-1 may be referred to as a calculator or a controller. When the voltage of the demodulated signal is higher than the reference voltage, the power detector and comparator 303-1 may transmit an enable signal for activating the operation of the ADC 102 of the third enable block 303 to the ADC 102. When the ADC 102 receives the enable signal for activating the operation of the ADC 102 of the third enable block 303 from the power detector and comparator 303-1, the ADC 102 may receive the demodulated signal from the power detector and comparator 303-1. The enable signal may be received through the same path as the demodulated signal or through a separate independent path.

The ADC 102 of the receiving device may convert an analog signal into a digital signal and may process the received signal through a baseband controller.

The data receiving device and the data receiving method according to embodiments may receive a signal based on, for example, Bluetooth. In addition, although a technique based on the Bluetooth standard is used, the embodiments are not limited to the Bluetooth standard. In the present specification, Bluetooth is described as an example of a data protocol for convenience, but this is merely one example, and may be equally interpreted as a device/method/data for RF reception.

The data receiving device and the data receiving method according to embodiments may determine the wake-up signal based on an activation condition for each of three steps and may demodulate the data signal of the received signal. The three steps may be functionally classified into the first enable block 301, the second enable block 302, and the third enable block 303.

A first enable operation corresponds to a processing procedure on the auxiliary path of the data receiving device and the data receiving method according to embodiments.

A digital block 301-1 of the first enable block 301 may generate the duty cycle and activate the operation of the second enable block 302 at regular intervals. Accordingly, the auxiliary path may be activated (on) or deactivated (off) based on the duty cycle according to embodiments.

The digital block 301-1 transmits an enable signal (on or off) of the duty cycle to the continuous RF amplifier 302-1, the power detector and comparator 302-2, and/or the demodulator and checker 302-3. While the signal of the duty cycle of the digital block 301-1 is activated (on), the operations of the continuous RF amplifier 302-1, the power detector and comparator 302-2, and the demodulator and checker 302-3 are activated, and while the signal of the duty cycle of the digital block 301-1 is deactivated (off), the operations of the continuous RF amplifier 302-1, the power detector and comparator 302-2, and the demodulator and checker 302-3 are deactivated.

The states of the data receiving device and the data receiving method include a normal state and a standby state.

In the normal state, all blocks of the main path for receiving data (e.g., data of a Bluetooth standard specification) are enabled. The digital block 301-1 that turns on/off the auxiliary path is turned off (function off).

In the standby state, the following operations are performed: 1) The digital block 301-1 turns on or off a receiver block of the auxiliary path according to the duty cycle. 2) The wake-up signal that has passed through a band selection filter is amplified by the continuous RF amplifier 302-1 based on a gain value that compensates for free space path loss (FSPL). 3) When the amplified signal is detected, the power detector and comparator 302-2 compares the voltage of the signal with a reference voltage, and only when the voltage is higher than the reference voltage, the signal is transmitted to the demodulator and checker 302-3. 4) The demodulator and checker 302-3 demodulates the wake-up signal modulated by the on-off keying (OOK) scheme. In addition, the demodulator and checker 302-3 identifies only the pattern of wake-up data of the wake-up signal at a promised data rate. The OOK scheme has an advantage of being simple to implement as a method of identifying the data pattern. 5) When the wake-up data is identified by the demodulator and checker 302-3, the demodulator and checker 302-3 transmits an enable signal for activating the operation of the main path 200 to the demodulator 101. 6) The main path 200 is a data path that connects the RF receiving module 100 to the demodulator 101 including the LNA, the VGA, and the like. When the operation of the demodulator 101 is activated by the demodulator and checker 302-3, the demodulator 101 demodulates the received signal. 7) When the above procedure 6) is completed and data (e.g., data of the Bluetooth standard) is not received, unnecessary power consumption may occur if the ADC and the baseband controller remain activated. The power detector and comparator 303-1 compares the voltage of the demodulated signal with a reference voltage, and if the voltage of the demodulated signal is higher than the reference voltage, transmits an enable signal to the ADC 102. The ADC 102 then converts the demodulated signal into a digital signal. The baseband controller decodes the digitally converted signal. 8) The above procedures 1) to 7) should be operated during a wake-up section of the duty cycle, and if the time is exceeded, all blocks except the auxiliary path are deactivated. 9) When normal Bluetooth data is received, the next process is performed according to a standard procedure.

The operation of the second enable block 302 is performed only when an enable condition in the first enable block 301 is satisfied. The enable condition in the first enable block 301 refers to a case where the signal of the duty cycle indicates activation (on).

When the auxiliary path is activated by the first enable block 301, whether to demodulate the RF received signal, i.e., whether to enable (on) the demodulation is determined based on the second enable block 302.

The second enable block 302 may receive and process the wake-up signal when the activation condition of the first enable block 301 is satisfied. However, since the wake-up signal may be mixed with surrounding noise signals, the second enable block 302 may perform an operation for detecting the wake-up signal.

The continuous RF amplifier 302-1 of the second enable block 302 may amplify the wake-up signal to a certain level or higher. To accurately detect the wake-up signal, the wake-up signal is amplified relative to the noise. The continuous RF amplifier 302-1 may be referred to simply as an amplifier.

The demodulator and checker 302-3 of the data receiving device according to embodiments transmits an enable signal for activating the operation of the main path 200 to the demodulator 101 when a wake-up data pattern is present in the signal received through the OOK scheme. Thereafter, the demodulator 101 of the main path 200 receives data (e.g., data according to the Bluetooth standard) and performs wake-up and synchronization.

The power detector and comparator 302-2 and the demodulator and checker 302-3 may each be referred to as a calculator or a controller.

As described above, each path according to embodiments includes a different demodulator. The main path 200 is a data path connected to a demodulator for demodulating a Bluetooth-based data signal. The Bluetooth standard is used as an example and is applicable to all RF-based received data. The auxiliary path 201 is a data path connected to a demodulator (OOK demodulator) for demodulating the wake-up signal. The demodulator and checker 302-3 may include an OOK demodulator. Here, the term "OOK" refers to on/off keying. The reason for describing the embodiment using OOK is that OOK has the advantage of a simple structure, which allows easy implementation. In addition to the OOK demodulator, a demodulator that processes the wake-up signal may be used in various ways. The overall RF receiving system in FIG. 1 is divided into blocks, and each block is enabled or transmits a related signal only when a specific condition (enable condition) for the block is satisfied. In the standby state, blocks are activated in stages, and if the condition is not satisfied, the corresponding block is turned off according to the duty cycle, thereby achieving the effect of reducing current consumption.

The embodiments may receive the wake-up data identified in the wake-up signal from the auxiliary pass to the main pass. Based on the wake-up data that has passed through the second enable block 302, the demodulator 101 of the main path may be activated and may demodulate the data signal included in the RF received signal.

The data receiving device and the data receiving method according to embodiments may perform the operation of the third enable block 303 before converting the demodulated data signal from analog to digital and performing baseband decoding.

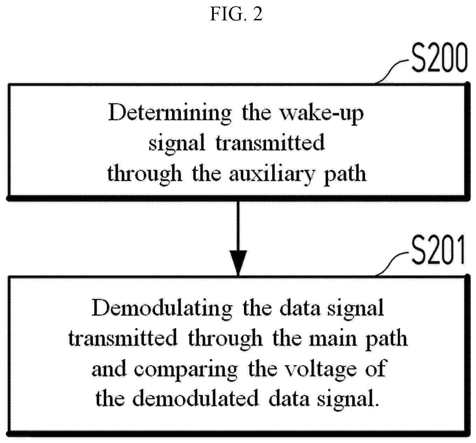

FIG. 2 illustrates a data receiving method according to embodiments.

The data receiving method according to embodiments may include the following steps.

The data receiving method may include step S200 of determining the wake-up signal transmitted through the auxiliary path. In step S200 of determining the wake-up signal transmitted through the auxiliary path, the wake-up signal may be determined by amplifying the voltage of the wake-up signal, comparing the amplified voltage of the wake-up signal with a first reference voltage, demodulating the wake-up signal using a preset scheme when the amplified voltage of the wake-up signal is greater than the first reference voltage, and checking a pattern of the demodulated wake-up signal. By amplifying the voltage of the wake-up signal, a signal having a sensitivity greater than or equal to a certain level may be accurately determined.

The first reference voltage according to embodiments may be a value of a primary reference voltage for determining whether the received signal is the wake-up signal based on the voltage value, and may be set according to an RF receiving environment and/or system settings.

Step S200 of determining the wake-up signal transmitted through the auxiliary path may be activated based on period information indicating whether to activate. When the period information is on, step S200 is activated, and when the period information is off, step S200 is deactivated.

When the data pattern of the wake-up signal is extracted based on a preset scheme according to embodiments, and the wake-up signal is determined based on the extracted data pattern, an operation of demodulating the data signal transmitted through the main path may be activated. To determine whether the received signal is the wake-up signal, a demodulation scheme capable of simply extracting the data pattern of the signal may be applied. For example, the preset demodulation scheme may include the on/off keying (OOK) scheme and/or a demodulation scheme representing the data pattern.

The data receiving method may further include step S201 of demodulating the data signal transmitted through the main path and comparing the voltage of the demodulated data signal. In step S201, the data signal transmitted through the main path may be demodulated, and the voltage of the demodulated data signal may be compared with a second reference voltage. Here, when the voltage of the data signal is greater than the second reference voltage, a step of decoding the data signal may be further performed.

The second reference voltage according to embodiments may be a value of a reference voltage for a secondary determination for determining whether to decode the data signal, even if whether the received signal is the wake-up signal is primarily determined, and may be set according to the RF receiving environment and/or system settings.

The data receiving method may reduce power consumption of the data receiving device effectively by using both the main path and the auxiliary path for the received signal to perform demodulation of the data signal through the main path and demodulation of the wake-up signal through the auxiliary path.

The data signal and the wake-up signal are processed through different paths. Whether the wake-up signal is enabled is checked at least twice. Depending on the sections referring the steps, they may be called first-step enable, second-step enable, and third-step enable. The terms "first" and "second" may be used in various ways depending on function or block.

According to embodiments, power consumption may be reduced by controlling whether to activate the operation of the auxiliary path.

According to embodiments, in a case of a fixed wireless network where the power of the wake-up signal is constant, a gain value of an amplifier may be determined in consideration of free space path loss (FSPL), so that a signal having power greater or less than a certain reference value may be filtered. By separating a baseband digital part that demodulates the wake-up signal and the data signal, and enabling each operation according to a condition, unnecessary power consumption may be reduced.

The embodiments have been described from the perspective of a method and/or a device, and the descriptions of the method and the device may be complementarily applied.

In this document, the symbols "/" and "," are interpreted as "and/or." For example, "A/B" is interpreted as "A and/or B," and "A, B" is interpreted as "A and/or B." Additionally, "A/B/C" means "at least one of A, B, and/or C," and "A, B, C" also means "at least one of A, B, and/or C." In addition, in this document, "or" is interpreted as "and/or." For example, "A or B" may mean: 1) only "A," 2) only "B," or 3) "A and B." In other words, "or" in this document may mean "additionally or alternatively."

Terms such as first, second, and the like may be used to describe various components in the embodiments. However, the various components according to the embodiments should not be construed as being limited by such terms. These terms are merely used to distinguish one component from another component. For example, a first user input signal may be referred to as a second user input signal. Similarly, a second user input signal may be referred to as a first user input signal. The use of such terms should be interpreted as not departing from the scope of the various embodiments. The first user input signal and the second user input signal are both user input signals, but unless clearly indicated otherwise in the context, they do not refer to the same user input signal.

### MODE OF PRACTING THE INVENTION

As described above, the relevant content has been described in the preceding subheadings, Best Mode for Carrying Out the Invention.

### INDUSTRIAL APPLICABILITY

As described above, the embodiments may be wholly or partially applied to the data receiving device, the data receiving method, and the system.

Those skilled in the art make various changes or modifications to the embodiments within the scope of the embodiments.

The embodiments may include changes and/or modifications, and such changes and/or modifications do not depart from the scope of the claims and equivalents thereof.

## Claims

1. A data receiving method comprising:
determining a wake-up signal transmitted through an auxiliary path by amplifying a voltage of the wake-up signal, comparing the amplified voltage of the wake-up signal with a first reference voltage, and, when the amplified voltage of the wake-up signal is greater than the first reference voltage, demodulating the wake-up signal using a preset scheme and checking a pattern of the demodulated wake-up signal;
demodulating a data signal transmitted through a main path and comparing a voltage of the demodulated data signal with a second reference voltage; and
decoding the demodulated data signal when the voltage of the demodulated data signal is greater than the second reference voltage.

2. The data receiving method of claim 1, wherein the wake-up signal transmitted through the auxiliary path is determined based on period information indicating whether to activate.

3. The data receiving method of claim 1, wherein a data pattern of the wake-up signal is extracted based on the preset scheme, and
when the wake-up signal is determined based on the extracted data pattern, demodulation of the data signal transmitted through the main path is activated.

4. The data receiving method of claim 1, wherein the data signal is demodulated based on the main path, and the wake-up signal is demodulated based on the auxiliary path.

5. The data receiving method of claim 3, wherein the preset scheme includes an on-off keying (OOK) scheme.

6. A data receiving device comprising:
a determiner configured to amplify a voltage of a wake-up signal transmitted through an auxiliary path, to compare the amplified voltage of the wake-up signal with a first reference voltage, and, when the amplified voltage of the wake-up signal is greater than the first reference voltage, to demodulate the wake-up signal using a preset scheme and to check a pattern of the demodulated wake-up signal, thereby determining the wake-up signal;
a demodulator configured to demodulate a data signal transmitted through a main path;
a comparator configured to compare a voltage of the demodulated data signal with a second reference voltage; and
a decoder configured to decode the demodulated data signal when the voltage of the demodulated data signal is greater than the second reference voltage.

7. The data receiving device of claim 6, wherein the wake-up signal transmitted through the auxiliary path is determined based on period information indicating whether to activate.

8. The data receiving device of claim 6, wherein a data pattern of the wake-up signal is extracted based on the preset scheme, and
when the wake-up signal is determined based on the extracted data pattern, demodulation of the data signal transmitted through the main path is activated.

9. The data receiving device of claim 6, wherein the data signal is demodulated based on the main path, and the wake-up signal is demodulated based on the auxiliary path.

10. The data receiving device of claim 8, wherein the preset scheme includes an on-off keying (OOK) scheme.
